(19) Europäisches Patentamt / European Patent Office / Office européen des brevets

(11) **EP 2 294 401 B1**

(12) **FASCICULE DE BREVET EUROPEEN**

(45) Date de publication et mention de la délivrance du brevet:
**13.09.2017 Bulletin 2017/37**

(21) Numéro de dépôt: **09784220.7**

(22) Date de dépôt: **23.06.2009**

(51) Int Cl.:
**G01N 29/34** *(2006.01)*     **G01N 29/07** *(2006.01)*
**G01N 29/11** *(2006.01)*

(86) Numéro de dépôt international:
**PCT/FR2009/000758**

(87) Numéro de publication internationale:
**WO 2010/007234 (21.01.2010 Gazette 2010/03)**

(54) **DISPOSITIF ACOUSTIQUE DE MESURE LOCALISÉE ET SANS CONTACT DES NON-LINEARITES ÉLASTIQUE ET DISSIPATIVE ET DE LA VISCOÉLASTICITÉ**

AKUSTISCHE VORRICHTUNG ZUR LOKALISIERTEN UND KONTAKTLOSEN MESSUNG VON ELASTISCHEN UND DISSIPATIVEN NICHTLINEARITÄTEN UND VISKOELASTIZITÄT

ACOUSTIC DEVICE FOR LOCALIZED CONTACTLESS MEASUREMENT OF ELASTIC AND DISSIPATIVE NON-LINEARITIES AND VISCOELASTICITY

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **24.06.2008 FR 0803542**

(43) Date de publication de la demande:
**16.03.2011 Bulletin 2011/11**

(73) Titulaires:
• **Université François Rabelais de Tours**
  **37041 Tours Cedex 1 (FR)**
• **Centre Hospitalier Régional Universitaire de Tours**
  **37044 Tours Cedex 9 (FR)**

(72) Inventeurs:
• **CALLE, Samuel**
  **F-37270 Larcay (FR)**
• **DEFONTAINE, Marielle**
  **F-37000 Tours (FR)**
• **REMENIERAS, Jean-Pierre**
  **F-37270 Montlouis (FR)**
• **RENAUD, Guillaume**
  **3024 NH ROTTERDAM (NL)**

(74) Mandataire: **Novagraaf Technologies**
  **Bâtiment O2**
  **2, rue Sarah Bernhardt**
  **CS90017**
  **92665 Asnières-sur-Seine Cedex (FR)**

(56) Documents cités:
EP-A1- 0 577 511      US-A- 3 867 836
US-A- 4 819 649      US-A- 4 844 082
US-A1- 2005 109 110   US-A1- 2007 016 038

• RENAUD ET AL: "Non-linear acoustic measurements to assess crack density in trabecular bone" INTERNATIONAL JOURNAL OF NON-LINEAR MECHANICS, PERGAMON PRESS, NEW YORK, NY, US, vol. 43, no. 3, 15 janvier 2008 (2008-01-15), pages 194-200, XP022511057 ISSN: 0020-7462
• CALLE S ET AL: "Application of nonlinear phenomena induced by focused ultrasound to bone imaging" ULTRASOUND IN MEDICINE AND BIOLOGY, NEW YORK, NY, US, vol. 29, no. 3, 1 mars 2003 (2003-03-01), pages 465-472, XP004420641 ISSN: 0301-5629
• ZAITSEV V ET AL: "Novel nonlinear-modulation acoustic technique for crack detection" NDT & E INTERNATIONAL, BUTTERWORTH-HEINEMANN, OXFORD, GB, vol. 39, no. 3, 1 avril 2006 (2006-04-01), pages 184-194, XP025109721 ISSN: 0963-8695 [extrait le 2006-04-01] cité dans la demande

**Description**

**DOMAINE TECHNIQUE DE L'INVENTION**

L'invention se rapporte à un procédé et dispositif acoustique de mesure localisée, sans contact, des non-linéarités élastique et dissipative et de la viscoélasticité non linéaire dans un milieu soumis à une contrainte acoustique basse fréquence et sondé par des impulsions ou trains d'ondes ultrasonores.

La présente invention concerne le domaine technique de la détection et la quantification du micro-endommagement (micro-fissures) dans des matériaux industriels ou biologiques, notamment le tissu osseux.

L'invention concerne également le domaine technique de la caractérisation d'autres milieux complexes tels que les milieux granulaires consolidés ou non-consolidés (roches, sable, béton, etc.), les milieux fluides complexes (cosmétique, agroalimentaire) ou biphasiques (polymères, pétroles).

**ETAT DE LA TECHNIQUE ANTERIEURE**

Il est connu de l'état de la technique plusieurs documents décrivant des systèmes de mesure de non-linéarités acoustiques. Ces publications décrivent des méthodes permettant de mesurer les effets non linéaires acoustiques en soumettant le matériau testé à des contraintes mécaniques d'amplitude variable. En effet, l'application d'une contrainte mécanique variable au matériau testé modifie ses propriétés élastiques, et parfois dissipatives.

Une partie de ces méthodes mesure les variations de la vitesse de propagation et de l'amplitude des ondes acoustiques dans un échantillon, induites par une variation quasi-statique de l'état de contrainte mécanique (pression hydrostatique ou contrainte uniaxiale) de cet échantillon. L'autre partie de ces méthodes utilisent l'interaction de deux ondes acoustiques et mesurent en général la croissance des harmoniques de l'onde basse fréquence :

- N. Ichida, T. Sato, M. Linzer; Imaging the nonlinear parameter of the medium, Ultrason. Imaging, Vol. 5, 1983 ; pp. 295-299.
- Z. Zhu, M.S. Roos, W.N. Cobb, K. Jensen; Determination of the acoustic nonlinearity parameter B/A from phase measurements; J. Acoust. Soc. Am., Vol. 74(5), 1983; pp.1518-1521 ;
- C. Barrière, D. Royer; Diffraction effects in the parametric interaction of acoustic waves: application to measurements of the nonlinearity parameter B/A in liquids; IEEE Trans. UFFC., Vol. 48 (6), 2001, pp 1706-1715 ;
- C.M. Sehgal, R.C. Bahn, J.F. Greenleaf; Measurement of the acoustic nonlinearity parameter B/A in human tissues by a thermodynamic method; J. Acoust. Am. Soc., Vol. 76(4), 1984; pp.1023-1029 ;
- V. Zaitsev, V. Nazarov, V. Gusev et B. Castagnede; Novel nonlinear-modulation acoustic technique for crack detection; NDT&E International, 39 (2006) 184-194;
- G. Gremaud, M. Bujard, et W. Benoit ; The coupling technique: A two-wave acoustic method for the study of dislocation dynamics ; J. Appl. Phys. 1987 61(5), 1795-1805.

Cependant, de tels systèmes de mesure présentent plusieurs inconvénients :

Les techniques utilisant une machine de test quasi-statique (nécessitant une mise en contact de l'échantillon avec le dispositif) ne sont pas applicables aux milieux fluides, aux gels et aux milieux vivants (applications biomédicales *in vivo*).

Les méthodes en milieu sec nécessitant un contact (collage par exemple) des transducteurs ultrasonores avec les échantillons, et donc altérant leurs surfaces, ne sont pas compatibles avec certaines applications, notamment les applications biomédicales.

Les méthodes employant une onde sonde ultrasonore émise en continue peuvent générer des ondes stationnaires complexifiant l'analyse des mesures.

Dans le cas d'une interaction colinéaire entre l'onde basse fréquence et l'onde ultrasonore, il peut exister des zones d'ombre acoustique dans le champ basse-fréquence créé par les transducteurs ultrasonores.

Les méthodes employant une interaction colinéaire entre l'onde basse fréquence et l'onde ultrasonore, et où l'onde ultrasonore doit faire un ou plusieurs allers-retours dans l'échantillon, ne sont applicables aux milieux fortement atténuants, tel que le tissu osseux.

Les méthodes employant un dispositif mécanique en contact pour faire varier les contraintes dans l'échantillon, sans utiliser une résonance mécanique de cet échantillon, ont une gamme d'utilisation limitée en termes de vitesse de déformation (au maximum quelques kHz).

Les méthodes employant un dispositif mécanique en contact pour faire varier les contraintes dans l'échantillon, utilisant une résonance mécanique de cet échantillon, peuvent atteindre des fréquences de déformation de quelques dizaines de kHz, cependant la fréquence de résonance mécanique est conditionnée par les dimensions géométriques et les propriétés physiques de l'échantillon.

Les méthodes faisant varier la pression hydrostatique par paliers et nécessitant d'enfermer l'échantillon testé dans une enceinte hermétique remplie d'un liquide sont de conception et d'usage relativement complexes.

Les méthodes n'utilisant pas d'onde acoustique basse fréquence pour générer les variations de contrainte permettent difficilement d'effectuer un test à la fois en compression et en traction (ou compression et détente). Dans le cas des machines de test, le dispositif de maintien altère l'échantillon. Dans le cas des enceintes hermétiques, une diminution de la pression hydrostatique inférieure à la pression atmosphérique est de conception relativement complexe.

US-4844082 (Fukukita et al.) décrit la mesure d'un paramètre non-linéaire d'un échantillon, comportant l'émission d'une onde ultrasonore basse fréquence et d'une onde ultrasonore haute fréquence, la réception des impulsions hautes fréquences ayant traversé l'échantillon, et la quantification du paramètre non-linéaire en fonction des modulations du temps de vol desdites impulsions hautes fréquences induites par le passage de l'onde ultrasonore basse fréquence dans l'échantillon.

G. Renaud et al. "Non-linear acoustic measurements to assess crack density in trabecular bone" (International Journal of non-linear mechanics, vol. 43, no. 3, 2008, pages 194-200) décrit la mesure de la non-linéarité d'un échantillon disposé dans un réservoir empli d'eau, comportant l'émission d'une onde acoustique basse fréquence (150 Hz) créant une variation périodique basse fréquence de la pression hydrostatique de l'eau dans la région de l'échantillon, la génération d'impulsions ultrasonores haute fréquence (800 kHz) traversant l'échantillon, et la quantification de la non-linéarité de l'échantillon à partir des modulations de phase des impulsions ultrasonores en fonction de l'amplitude de l'onde basse fréquence.

## EXPOSE DE L'INVENTION

La présente invention vise à pallier les inconvénients de l'état de la technique en proposant une méthode et un dispositif de mesure localisée et sans contact des non-linéarités élastiques et dissipatives et de la viscoélasticitéd'un échantillon soumis à des contraintes extérieures.

Selon un autre aspect, la présente invention permet également d'envisager la mesure des non-linéarités élastiques et dissipatives et de la viscoélasticité dans des domaines d'applications où le contact avec le système de mesure est non souhaitable tels que l'agro-alimentaire et les applications biomédicales.

De façon alternative, la présente invention permet également d'envisager la quantification de l'endommagement d'un matériau, notamment pour des applications industrielles ou médicales.

L'invention vise par ailleurs à mesurer ces variations instantanées d'élasticité et d'atténuation en fonction de la variation instantanée de la contrainte extérieure, pendant les phases de compression et de traction de l'échantillon, ainsi qu'à quantifier le comportement viscoélastique de l'échantillon analysé.

Pour ce faire, les contraintes extérieures appliquées à l'échantillon sont générées par une onde acoustique basse fréquence dont la longueur d'onde est nettement supérieure à la taille de l'échantillon dans le milieu où se trouve l'échantillon. Les variations de pression hydrostatique ainsi générées compriment et détendent l'échantillon dans les trois directions de l'espace. Simultanément, une série d'impulsions ultrasonores (hautes fréquences) est transmise à travers l'échantillon afin de mesurer les variations de vitesse de propagation et d'atténuation du milieu associées aux variations de la pression hydrostatique.

Plus précisément, l'invention a pour objet un dispositif acoustique de mesure, localisée et sans contact, des non-linéarités élastique et dissipative et de la viscoélasticité d'un échantillon . Ce dispositif comporte un réservoir apte à recevoir l'échantillon, des moyens d'émission d'une onde acoustique basse fréquence pour créer une variation périodique basse fréquence de la pression hydrostatique dans l'échantillon, des moyens de mesure aptes à mesurer l'onde acoustique basse fréquence générée par les moyens d'émission, des moyens de génération d'impulsions ultrasonores haute fréquence, des moyens de réception disposés de sorte que les impulsions ultrasonores hautes fréquences ayant traversées l'échantillon soient reçues par les moyens de réception, et une unité d'analyse comportant un module de calcul des linéarités élastiques et dissipatives ainsi que la viscoélasticité de l'échantillon selon la revendication 1.

Avantageusement, le dispositif comporte un module d'imagerie multi-paramétrique des effets viscoélastiques $(\tan(\phi))$ et des effets non-linéaires acoustiques élastique ($\alpha$, $\beta$ et $\delta$) et dissipatif.

De préférence, les moyens de génération de l'onde acoustique basse fréquence comportent un pot vibrant pour la mise en résonance d'un piston dédié.

De façon alternative, les moyens de génération de l'onde acoustique basse fréquence comportent un projecteur acoustique.

Avantageusement, les moyens d'émission des impulsions ultrasonores haute fréquence et les moyens de génération de l'onde acoustique basse fréquence sont orientés de sorte que les directions de propagation des impulsions ultrasonores et de l'onde acoustique basse fréquence sont perpendiculaires.

De préférence, le dispositif comporte des moyens de représentation instantanée des non-linéarités viscoélastiques et dissipatives en fonction des phases de compression et de détende de la pression hydrostatique basse fréquence.

L'invention concerne également une méthode acoustique de mesure, localisée et sans contact, des non-linéarités élastique et dissipative et de la viscoélasticité d'un échantillon disposé dans un réservoir, comportant une étape d'émission d'une onde acoustique basse fréquence pour créer une variation périodique basse fréquence de la pression hydrostatique dans l'échantillon, une étape de mesure de l'onde acoustique basse fréquence générée par les moyens d'émission, une étape de génération d'impulsions ultrasonores haute fréquence traversant l'échantillon, une étape de réception des impulsions ultrasonores hautes fréquences ayant traversées l'échantillon, et une étape de quantification, via une unité d'analyse comportant un module de calcul des non-linéarités élastiques et dissipatives ainsi que de la viscoélasticité de l'échantillon selon la revendication 8.

Avantageusement, l'unité d'analyse réalise un calcul instantané des effets non-linéaires élastiques et dissipatifs ainsi qu'une représentation du comportement viscoélastique complexe de l'échantillon lors des phases de traction et de compression de la pression hydrostatique basse fréquence.

Selon des modes de réalisation particuliers, le calcul instantané des non-linéarités est réalisé en fonction soit de l'amplitude soit de la vitesse de déformation lors des phases de traction et de compression de la pression hydrostatique basse fréquence.

Avantageusement, l'unité d'analyse réalise un calcul des composantes fréquentielles (fréquence nulle : ordre 0 ; fréquence fondamentale : ordre 1 ; fréquence double : ordre 2) des non-linéarités élastiques et dissipatives en fonction de l'amplitude moyenne de la pression hydrostatique basse fréquence.

Avantageusement, la fréquence de l'onde acoustique basse fréquence est comprise en quelques Hz et 100kHz, les impulsions ultrasonores présentent une gamme de fréquence de 20kHz à 100MHz et une cadence de tir environ 10 fois supérieure à la fréquence de l'onde acoustique basse fréquence, dans le but d'échantillonner correctement les périodes de traction/compression de l'onde basse fréquence.

De préférence, l'unité d'analyse traite une séquence résultant du moyennage de 2 à 100 tirs de trains d'onde acoustique basse fréquence et d'impulsions hautes fréquences successifs.

Avantageusement, la méthode comporte une étape de représentation instantanée des non-linéarités viscoélastiques et dissipatives en fonction des phases de compression et de détende de la pression hydrostatique basse fréquence.

Le fait de générer une variation de la pression hydrostatique à l'intérieur du réservoir à l'aide d'une onde acoustique basse fréquence interagissant de manière synchronisée dans l'échantillon avec une onde « sonde » ultrasonore permet d'obtenir une mesure instantanée des effets viscoélastiques et des effets non linéaires élastique et dissipatif dans l'échantillon. L'utilisation d'une onde acoustique pour générer les variations de la pression hydrostatique dans le milieu permet d'étudier en dynamique les effets non-linéaires acoustiques pendant les phases successives de traction et de compression de l'échantillon.

Selon le type d'échantillon analysé, un hystérésis peut être éventuellement mesuré entre les phases d'augmentation et de diminution de la pression hydrostatique.

L'association d'un piston à un pot vibrant permet de concevoir et réaliser à façon des moyens de génération de l'onde basse fréquence avec une grande latitude pour le choix de la vitesse de déformation. En effet, les paramètres géométriques et structurels du piston déterminent sa fréquence de résonance.

L'utilisation d'un projecteur acoustique (haut-parleur sous-marin) pourra avantageusement remplacer le système pot vibrant / piston, la fréquence de l'onde acoustique basse fréquence n'étant alors plus dépendante du piston.

L'utilisation d'une onde acoustique basse fréquence faisant varier les conditions de pression hydrostatique de manière homogène dans les trois dimensions de l'espace permet de « sonder » l'échantillon en faisant varier la direction de propagation de l'onde ultrasonore sonde et étudier ainsi l'anisotropie des non-linéarités viscoélastiques et dissipatives du milieu.

La génération sans contact dans le milieu d'une contrainte basse fréquence en traction et en compression au moyen d'une onde acoustique permet une étude des non-linéarités viscoélastiques et dissipatives :

- dans les milieux fluides et gels non préhensibles dans une machine de test mécanique classique ;

- dans les milieux à protéger d'une éventuelle contamination extérieure (milieux biologiques et agro-alimentaires) ;

- dans les milieux solides à géométries complexes ; et

- pour l'application au vivant (à titre d'exemple, étude du micro-endommagement dans l'os du talon).

**BREVE DESCRIPTION DES FIGURES**

D'autres caractéristiques et avantages de l'invention ressortiront à la lecture qui suit d'un exemple de réalisation détaillé, en référence aux figures annexées qui représentent respectivement :

- la figure 1, une vue schématique d'un exemple de réalisation d'un dispositif de mesure des paramètres non linéaires élastique et dissipatif et du paramètre viscoélastique d'un échantillon selon l'invention ;

- la figure 2, une illustration de la pression hydrostatique (onde acoustique basse fréquence) mesurée à l'aide d'un hydrophone situé dans le réservoir dans le même plan que les transducteurs ultrasonores sous le piston basse fréquence, selon l'invention ;

- la figure 3, une illustration du calcul de la modulation du temps de vol des trains d'ondes ultrasonores hautes fréquences, en fonction du temps, se propageant dans un os de talon humain ;

- la figure 4, une illustration du diagramme instantané de la modulation du temps de vol des impulsions ultrasonores représentant les non-linéarités élastiques en fonction des variations de la contrainte basse fréquence (pression hydrostatique) dans un os de talon ;

- la figure 5, une illustration du taux de modulation d'amplitude des trains d'ondes ultrasonores hautes fréquences, en fonction du temps, se propageant dans un os de talon humain ;

- la figure 6, une illustration du diagramme instantané du taux de modulation d'amplitude des impulsions ultrasonores représentant les non-linéarités dissipatives en fonction des variations de la contrainte basse fréquence (pression hydrostatique) dans un os de talon humain ;

- les figures 7a et 7b, des illustrations de la modulation du temps de vol et du taux de modulation d'amplitude des trains d'ondes ultrasonores hautes fréquences, mesurées dans le domaine fréquentiel, aux ordres 0, 1 et 2, correspondant respectivement à la fréquence nulle, à la fréquence fondamentale de résonance du piston, et à la fréquence double du piston, après propagation dans un os de talon humain et pour différents niveaux de l'amplitude basse fréquence moyenne.

## DESCRIPTION DETAILLEE D'UN MODE DE REALISATION

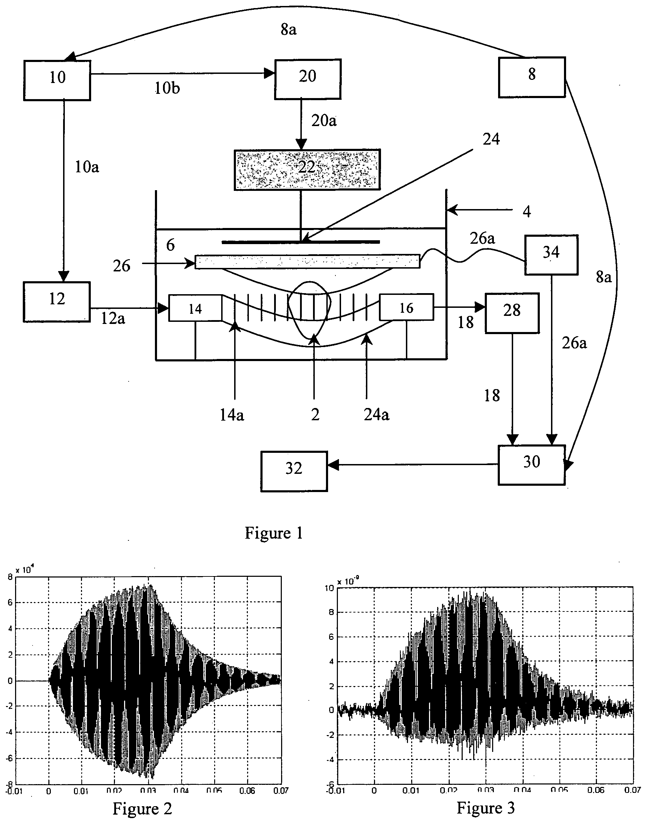

La figure 1 illustre un exemple de réalisation d'un dispositif de mesure instantanée, localisée et sans contact des variations de célérité et d'atténuation d'impulsions ultrasonores hautes fréquences se propageant dans un échantillon (2) soumis à des variations de pression hydrostatique générées par une onde acoustique basse fréquence.

Dans cet exemple, l'échantillon (2) analysé est placé dans un réservoir (4) empli d'un fluide (6) tel que de l'eau. Remplir le réservoir d'eau permet d'assurer une propagation correcte des impulsions ultrasonores. Néanmoins l'eau peut avantageusement être remplacée par tout autre fluide.

Le dispositif comprend un appareil de synchronisation (8) permettant de générer un signal de synchronisation (8a), de préférence sous forme carrée. Ce signal de synchronisation (8a) permet la synchronisation d'un générateur de signaux (10) et d'un oscilloscope (30), et assure ainsi le parfait synchronisme des mesures des impulsions hautes fréquences et de la pression basse fréquence, autorisant la représentation pertinente des diagrammes instantanés des non-linéarités viscoélastiques et dissipatives.

Le générateur (10) de signal comporte deux voies (10a) et (10b) et permet de délivrer deux signaux synchronisés, de préférence sous forme sinusoïdale. Alternativement, deux générateurs peuvent être utilisés à la place du générateur double voies (10). Dans ce cas, les deux générateurs de signaux sont synchronisés par le signal de synchronisation (8a).

La première voie (10a) de ce générateur (10) est avantageusement reliée à un amplificateur de puissance haute fréquence (12) et permet d'obtenir un signal d'émission électrique haute fréquence (12a). L'amplificateur de puissance haute fréquence (12) est relié à un transducteur ultrasonore d'émission (14) permettant de transformer le signal d'émission électrique haute fréquence (12a), constitué d'impulsions électriques haute fréquence, en un train d'impulsions ultrasonores (14a).

La fréquence du transducteur d'émission (14) sera avantageusement comprise entre 20 kHz et 100 MHz. À titre d'exemple, la fréquence nominale déterminée pour une application dans l'os du talon est égale à 1MHz. Le transducteur d'émission (14) est également placé dans le réservoir (4) et disposé en vis-à-vis d'un transducteur ultrasonore de réception (16) afin que les impulsions ultrasonores (14a) traversant l'échantillon (2) soient reçues au niveau du transducteur de réception (16). Les impulsions ultrasonores (14a) peuvent être constituées d'une à quelques périodes ultrasonores.

Un signal de réception électrique haute fréquence (18) issu du transducteur ultrasonore de réception (16) est avantageusement transmis à un amplificateur de réception haute fréquence (28), puis numérisé par l'oscilloscope numérique (30).

Les transducteurs d'émission (14) et de réception (16) peuvent être des mono-transducteurs plans ou focalisés, des réseaux multi-éléments annulaires plans ou focalisés, ou des réseaux multi-éléments linéaires plans ou focalisés, mono ou bi-dimentionnel. Le transducteur de réception (16) peut également être un hydrophone. À titre d'exemple, les résultats dans l'os du talon ont été obtenus à l'aide de mono-transducteurs plans.

La deuxième voie (10b) du générateur (10) est, de préférence, reliée à un amplificateur de puissance basse fréquence (20). Cet amplificateur de puissance basse fréquence (20) transmet un signal électrique basse fréquence (20a) amplifié à un pot vibrant (22) apte à mettre en mouvement un piston (24) solidaire de l'axe du pot vibrant (22) et disposé à l'intérieur du réservoir (4). Le pot vibrant (22) permet de générer des vitesses de déformation avantageusement comprises entre 10Hz et 15kHz. À titre d'exemple, des fréquences comprises entre 2 et 5kHz ont été utilisées dans l'application relative à l'os du talon. Pour un fonctionnement idéal, il est nécessaire d'envoyer quelques dizaines de périodes sinusoïdales afin de laisser le piston (24) atteindre sa résonance d'amplitude maximale.

La longueur d'onde basse-fréquence doit être nettement supérieure à la distance entre les transducteurs ultrasonores émetteur (14) et récepteur (16) afin de pouvoir considérer le champ de pression basse fréquence quasi-statique pendant la durée de propagation d'une impulsion ultrasonore (14a) entre les transducteurs ultrasonores (14) et (16).

Le mouvement du piston (24) génère une onde acoustique basse fréquence (24a), de préférence sinusoïdale et présentant avantageusement une direction de propagation orthogonale à la direction de propagation des impulsions ultrasonores (14a). Cette onde acoustique basse fréquence (24a) génère une variation sinusoïdale de la pression hydrostatique dans une région localisée du réservoir (4). En effet, la longueur d'onde basse fréquence (24a) est très grande vis-à-vis d'au moins une des dimensions de l'échantillon (2) sondé.

Alternativement à une interaction orthogonale entre les impulsions ultrasonores (14a) et l'onde acoustique basse fréquence (24a), il est possible de disposer la paire de transducteurs ultrasonores (14) et (16) avec un angle quelconque vis-à-vis de la direction de propagation de l'onde basse fréquence (24a).

La configuration d'une interaction orthogonale entre les directions de propagation des impulsions ultrasonores (14a) et basse fréquence (24a) autorise une étude de l'anisotropie des paramètres non linéaires de l'échantillon (4) dans un plan parallèle au piston (24). Par ailleurs, si on considère un angle quelconque entre le plan des transducteurs haute fréquence (14,16) et la direction de propagation de l'onde acoustique basse fréquence (24a), on accède à une étude de l'anisotropie des paramètres non linéaires dans les trois dimensions de l'espace.

Afin de maximiser les variations d'amplitude de l'onde acoustique basse fréquence (24a), le piston (24) fonctionne de préférence sur son premier mode de résonance. Les choix de la densité et de la rigidité du matériau constitutif du piston (24), ainsi que son diamètre et son épaisseur, déterminent sa fréquence de résonance et permettent d'obtenir des variations de pression hydrostatique de l'ordre de 70 kPa.

À titre d'exemple, un piston en verre de diamètre 140mm et d'épaisseur 6mm permet de générer une vibration à la fréquence 2800Hz et permet d'atteindre des variations d'amplitude de pression hydrostatique de 70kPa à 15mm de la surface du piston.

Les moyens d'émission de l'onde acoustique basse fréquence (24a) pourraient alternativement être composés d'un haut-parleur sous-marin (projecteur acoustique) ou sonar afin d'atteindre des vitesses de déformation supérieures à 15kHz tout en maintenant des niveaux de pression élevés.

Les variations de la pression hydrostatique basse fréquence sont mesurées à l'aide d'un hydrophone (26) placé parallèlement au piston dans le plan des transducteurs haute fréquence (14) et (16). Ainsi, l'onde basse fréquence générée dans le réservoir (4) est mesurée par cet hydrophone (26). Le signal électrique basse fréquence (26a) issu de l'hydrophone (26) est avantageusement transmis à un amplificateur (34) puis communiqué à l'oscilloscope (30) pour numérisation. La forme typique de ce signal électrique basse fréquence (26a) amplifié est illustrée, à titre d'exemple, dans la figure 2.

Les courts trains d'onde haute fréquence (14a) traversent l'échantillon (2) avec une cadence de tirs permettant un échantillonnage correct des variations de la pression hydrostatique dans le réservoir (4). Typiquement pour une onde acoustique basse fréquence (24a) de fréquence 2800 Hz, une cadence des impulsions ultrasonores (14a) d'environ 25 kHz est utilisée, soit environ 10 tirs ultrasonores par période de l'onde acoustique basse fréquence (24a).

La longueur temporelle de la fenêtre d'acquisition des signaux électriques de réception haute fréquence (18) et du signal électrique basse fréquence (26a) est judicieusement déterminée afin d'enregistrer une partie du signal non soumis aux variations de pression basse fréquence et la totalité de la montée en résonance du piston basse fréquence. À titre d'exemple, si on utilise un piston résonant à 2800Hz, une fenêtre de 70ms est nécessaire pour couvrir l'ensemble de l'expérience (figure 2).

Afin d'optimiser le rapport signal sur bruit du signal électrique de réception haute fréquence (18), un moyennage sur N expériences est effectué en envoyant N fois un train d'ondes acoustiques basse fréquence (24a).

Une fréquence d'échantillonnage du signal électrique de réception haute fréquence (18) nettement supérieure (de l'ordre de 10 à 50 fois supérieure) à la fréquence des impulsions ultrasonores (14a) est choisie. À titre d'exemple on obtient dans l'eau un niveau de bruit de mesure de la modulation du temps de vol de l'ordre de $10^{-10}$ secondes pour

une fréquence d'échantillonnage de 25MHz, un moyennage N=30 et des impulsions ultrasonores de fréquence 1 MHz.

Le signal électrique de réception haute fréquence (18) et le signal électrique basse fréquence (26a) numérisés par l'oscilloscope (30) sont ensuite transmis à l'unité d'analyse (32) pour stockage et traitement des données.

L'unité d'analyse (32) permet de traiter les informations contenues dans le signal électrique de réception haute fréquence (18) et le signal électrique basse fréquence (26a) préalablement numérisés et synchronisés afin de calculer les non-linéarités élastique et dissipative ainsi que le coefficient de viscoélasticité de l'échantillon (2).

Les non-linéarités élastique et dissipative et la viscoélasticité sont calculées à partir des variations du temps de vol et de l'amplitude du signal électrique de réception haute fréquence (18) en fonction des variations de la pression basse fréquence.

Les variations du temps de vol des courts trains d'ondes ultrasonores (14a), générés pendant les phases de compression et de détente de la pression hydrostatique basse fréquence, sont liées aux variations de la vitesse de propagation ultrasonore dans le milieu (équation 1) :

$$\frac{\partial TOF}{\partial PBF} = -\frac{L}{C_o^2}\frac{\partial c}{\partial PBF} \text{ , où} \qquad \text{Eq. 1}$$

- L est la distance entre les transducteurs ultrasonores émetteur et récepteur (14) et (16) ;

- TOF (Time Of Flight) est le temps de propagation des impulsions hautes fréquences (14a) entre les transducteurs ultrasonores (14) et (16) ;

- c est la vitesse de propagation de l'onde ultrasonore dans le milieu considéré soumis aux variations de pression basse fréquence ;

- Co est la vitesse de propagation de l'onde ultrasonore dans le milieu considéré en l'absence de variations de pression basse fréquence ;

La vitesse de propagation ultrasonore étant reliée au module élastique K et à la densité du milieu considéré $\rho_o$, on peut écrire de la même façon les variations de la célérité c ou du temps de vol (TOF) en fonction des variations de K (équation 2):

$$\frac{\partial TOF}{\partial PBF} = -\frac{L}{2C_o^3\rho_o}\frac{\partial K}{\partial PBF} \text{ , où} \qquad \text{Eq.2}$$

- K est le module viscoélastique ;

- $\rho_o$ est la densité du milieu en l'absence de variations de la pression basse fréquence.

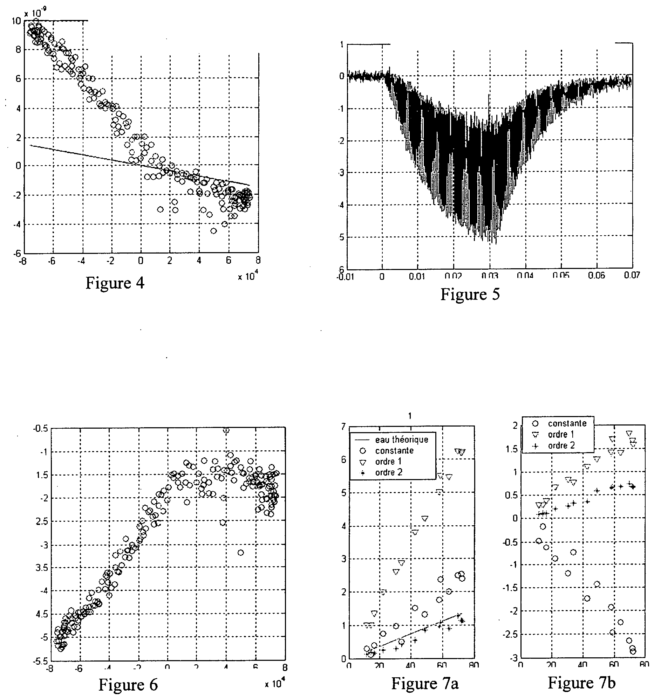

L'unité d'analyse (32) comprend un module de calcul des non-linéarités élastiques et les non-linéarités dissipatives de l'échantillon (2) en fonction du temps, telles qu'illustrées sur les figures 3 et 5, respectivement. L'unité d'analyse (32) comporte également un module de calcul du paramètre de viscosité.

Le module de calcul des non-linéarités élastiques applique un algorithme d'intercorrélation entre la première impulsion haute fréquence issue du signal électrique de réception haute fréquence (18) (correspondant à une impulsion ultrasonore (14a) n'ayant pas été soumise aux variations de la pression basse fréquence) et chacune des impulsions haute fréquence suivantes de ce signal électrique de réception (18). L'intercorrélation conduit à l'estimation du délai entre la première impulsion haute fréquence de référence et la nème impulsion haute fréquence du signal électrique de réception (18). Afin d'optimiser l'estimation de ce délai, une interpolation parabolique du pic d'intercorrélation est implémentée dans le but de s'affranchir de l'échantillonnage numérique. Le résultat *in fine* conduit à la modulation du temps de vol (Time Of Flight Modulation : TOFM) en fonction du temps (figure 3).

Alternativement à un algorithme d'intercorrélation, un algorithme de démodulation de la phase des signaux issus de l'onde sonde ultrasonore (14a) peut être utilisé dans le cas où cette dernière est envoyée en continu durant le temps d'un tir de train d'ondes basse fréquence (24a).

Pour le module de calcul des non-linéarités dissipatives, trois approches sont possibles :

1.La mesure du taux de variation de l'amplitude pic-pic des impulsions du signal électrique de réception haute fréquence (18) dans le domaine temporel ;

2.La mesure du taux de variation de l'amplitude maximale des impulsions du signal électrique de réception haute fréquence (18) dans le domaine fréquentiel (figure 5);

3.La mesure du taux de variation de la pente d'atténuation fréquentielle.

À l'instar des non-linéarités élastiques, la variation est calculée dans chacun de ces trois cas à partir d'une impulsion du signal électrique de réception haute fréquence (18), signal de référence n'ayant pas subi de variations de pression basse fréquence. Dans le cas de l'approche 3), l'atténuation fréquentielle, appelée couramment BUA (Broadband Ultrasonic Attenuation) dans les applications osseuses, correspond à la pente du rapport des modules des spectres du signal de référence (première impulsion du signal électrique de réception haute fréquence (18)) et de la n$^{ème}$ impulsions du signal électrique de réception haute fréquence (18) sur la bande passante considérée. Le résultat *in fine* conduit au taux de variation en amplitude ou en atténuation en fonction du temps (figure 5).

À partir, d'une part, des fonctions temporelles des non-linéarités élastique et dissipative exposées précédemment et, d'autre part, de la mesure synchronisée des variations de la pression basse fréquence en fonction du temps, il est possible d'analyser et présenter les résultats selon deux modalités :

1) Modalité instantanée : diagrammes instantanés des non-linéarités élastique et dissipative en fonction de l'amplitude de la pression basse fréquence ou de la vitesse de déformation de l'amplitude basse fréquence (c'est-à-dire la dérivée) ;

2) Modalité fréquentielle : analyses fréquentielles des non-linéarités élastique et dissipative aux ordres 0, 1 et 2 (respectivement fréquence nulle, fréquence fondamentale de résonance du piston et fréquence double du piston) en fonction de l'amplitude moyenne de la pression basse fréquence.

Dans le cas de la modalité instantanée, chaque point de la mesure de l'amplitude de la pression basse fréquence est synchronisé avec un point de calcul de la modulation du temps de vol (non-linéarité élastique) ou du taux de la modulation d'amplitude (non-linéarité dissipative). Ces mesures synchronisées conduisent naturellement à une représentation de la modulation du temps de vol ou de l'amplitude des impulsions ultrasonores (14a) en fonction de l'amplitude de la pression basse fréquence, et au suivi instantané des non-linéarités viscoélastiques et dissipatives durant les phases de compression et de détente dans l'échantillon (2). La fenêtre d'analyse peut être choisie durant la phase de montée en résonance du piston, sur le plateau une fois la résonance établie et/ou durant la phase de relaxation du piston (après l'arrêt du signal électrique (10b).

La représentation peut être réalisée par le biais d'un module d'imagerie tomographique multi-paramétrique en transmission positionné dans un plan parallèle (XoY) au plan du piston et permettant de visualiser les effets viscoélastiques (tan($\phi$)) et les effets non-linaires acoustiques élastiques ($\alpha,\beta,\delta$) et dissipatifs. Le dispositif comporte alors, de façon avantageuse, un module mécanique de rotation et de translation de l'échantillon (2) ou de la paire de transducteurs ultrasonores (14,16). Toutefois, la paire de transducteurs ultrasonores et le système de translation associé pourront avantageusement être remplacés par un réseau de transducteurs à une dimension.

La représentation peut également être réalisée par un module d'imagerie transverse multi-paramétrique comportant un module de balayage mécanique de l'échantillon (2) ou des transducteurs ultrasonores (14,16) positionné dans le plan perpendiculaire (YoZ) au plan du piston. L'utilisation d'un réseau à deux dimensions de transducteurs associé à un module de balayage électronique pourra avantageusement remplacer la paire de transducteurs ultrasonores et le système de balayage mécanique.

Si l'échantillon considéré ne présente pas de non-linéarité de type hystérétique (milieux endommagés ou granulaires), et que cependant ce diagramme présente une hystérésis, celui-ci peut conduire à la mesure d'un coefficient de viscoélasticité. Ce dernier est obtenu, par le biais d'une unité de calcul du paramètre de viscoélasticité, à partir de la mesure du déphasage $\Phi$ entre la pression basse fréquence et la modulation de temps de vol des signaux électriques de réception haute fréquence (18). Le coefficient de viscoélasticité (ou facteur de perte) couramment utilisé vaut alors tan($\Phi$).

À titre indicatif, les figures 4 et 6 illustrent respectivement un exemple de modulation du temps de vol et un exemple du taux de modulation de l'amplitude des signaux électriques de réception haute fréquence (18) en fonction de l'amplitude de la pression basse fréquence dans le cadre de la mesure d'un os du talon.

À l'instar d'un essai mécanique sur une machine de test quasi-statique, une telle analyse permet de visualiser distinctement et au cours d'un même essai les comportements viscoélastiques et dissipatifs du milieu en traction, pour une variation de pression hydrostatique négative, et en compression, pour une variation de pression hydrostatique positive.

Dans le cas de la modalité fréquentielle, les modulation de temps de vol et d'amplitude des signaux électriques de réception haute fréquence (18) ainsi que l'amplitude de la pression basse fréquence en fonction du temps sont découpées en fenêtres glissantes de tailles égales à 4 ou 5 périodes basse fréquence durant les phases de montée en résonance du piston et de descente. Les fenêtres des deux modulations non-linéaires (élastique et dissipative) sont analysées dans le domaine fréquentiel, où les amplitudes du module de ces spectres sont relevées pour la fréquence nulle (ordre 0), la fréquence fondamentale de résonance du piston (ordre 1) et la fréquence double du piston (ordre 2).

En parallèle, les modules des spectres des fenêtres correspondant à l'amplitude de la pression basse fréquence conduisent au calcul de l'amplitude moyenne de cette pression basse fréquence. Le choix de 4 à 5 périodes basse fréquence résulte du compromis entre une longueur suffisante pour calculer une transformée de Fourier pertinente et une longueur minimale pour pouvoir considérer constante l'amplitude moyenne de la pression basse fréquence.

À titre indicatif, les figures 7a et 7b illustrent respectivement un exemple de modulation du temps de vol et un exemple du taux de modulation de l'amplitude des signaux électriques codés et amplifiés (18), obtenus à partir de la mesure dans le domaine fréquentiel aux ordres 0, 1 et 2, en fonction de l'amplitude moyenne de la pression basse fréquence dans le cadre de la mesure d'un os du talon.

Contrairement à la modalité instantanée, l'information liée aux phases de traction et de compression n'est plus accessible, l'amplitude de la pression basse fréquence étant moyennée sur quelques périodes dans le domaine de Fourier. En revanche, l'analyse fréquentielle conduit à une décomposition des non-linéarités selon différents ordres fréquentiels : constante, fondamental et harmoniques. Par ailleurs, elle permet d'étudier les comportements éventuellement différents lors des phases d'augmentation et de diminution de l'amplitude basse fréquence, lors de la résonance du piston.

Une relation phénoménologique (K.R. McCall et R.A. Guyer; Equation of state and wave propagation in hysteretic nonlinear elastic materials; Journal of Geophysical Research, Vol. 99(B12), 1984; pp.23 887-23 897.) basée sur un développement en série de Taylor jusqu'à l'ordre 2 du module élastique K en fonction de la pression basse fréquence, modifiée pour prendre en compte les effets non-linéaires non classiques ou hystérétiques est utilisée pour extraire ou identifier les paramètres non-linéaires classiques β, δ (ordres 1 et 2) et non classique α selon l'équation :

$$K = K_0 + \beta.PBF - \delta.\frac{PBF^2}{K_0} + \alpha\left(\Delta(PBF) - PBF.sign\left(\dot{PBF}\right)\right), \quad \text{Eq.3}$$

où :

- Ko est le module élastique linéaire ;

- $\dot{PBF}$ est la dérivée temporelle de la pression basse fréquence.

Cette identification peut être effectuée à partir d'un ajustement sur le diagramme instantané reliant la modulation de temps de vol (ou élastique) aux variations de la pression basse fréquence.

L'invention n'est pas limitée aux exemples de réalisation décrits et représentés. Il est également possible de prévoir des modes de réalisation pour lesquels le réservoir (4) contiendrait un élément en phase gazeuse et non pas liquide. Par ailleurs, les différents modes de réalisation de l'unité d'analyse (32) ainsi que les résultats obtenus dans ces modes peuvent être combinés de différentes façons sans sortir du cadre de l'invention.

**Revendications**

**1.** Dispositif acoustique de mesure, localisée et sans contact, des non-linéarités élastique et dissipative et de la viscoélasticité d'un échantillon (2), comportant

• un réservoir (4) empli d'un fluide et apte à recevoir l'échantillon (2),
• des moyens d'émission (10, 20, 22, 24) d'une onde acoustique basse fréquence (24a) aptes à créer une variation périodique basse fréquence de la pression hydrostatique du fluide dans la région de l'échantillon (2),
• des moyens de mesure (26, 30, 34) aptes à mesurer les variations de la pression hydrostatique dues à l'onde acoustique basse fréquence (24a) générée par les moyens d'émission (10, 20, 22, 24),
• des moyens de génération (10, 12, 14) d'impulsions ultrasonores haute fréquence (14a),
• des moyens de réception (16, 28, 30) disposés en vis-à-vis des moyens de génération (10, 12, 14) de sorte que les impulsions ultrasonores hautes fréquences (14a) ayant traversé l'échantillon (2) soient reçues par les moyens de réception (16, 28, 30),

• un équipement de synchronisation (8) permettant de générer un signal de synchronisation (8a) pour synchroniser les mesures des impulsions hautes fréquences et de la pression basse fréquence, et

• une unité d'analyse (32) comportant un module de calcul des non-linéarités élastique et dissipative ainsi que de la viscoélasticité de l'échantillon à partir des modulations du temps de vol et de l'amplitude des impulsions ultrasonores (14a) ayant traversé l'échantillon (2) en fonction des variations de la pression dues à l'onde acousitque basse fréquence.

2. Dispositif acoustique de mesure selon la revendication 1 , comportant un module d'imagerie multi-paramétrique des effets viscoélastiques (tan($\varphi$)) et des effets non-linéaires acoustiques élastique ($\alpha$, $\beta$ et $\delta$) et dissipatif.

3. Dispositif acoustique de mesure selon la revendication 1 ou 2, dans lequel les moyens de génération (24) de l'onde acoustique basse fréquence (24a) comportent un pot vibrant (22) pour la mise en résonance d'un piston (24) dédié apte à créer une variation périodique basse fréquence.

4. Dispositif acoustique de mesure selon la revendication 1 ou 2, dans lequel les moyens de génération (24) de l'onde acoustique basse fréquence (24a) comportent un projecteur acoustique apte à créer une variation acoustique basse fréquence.

5. Dispositif acoustique de mesure selon l'une quelconque des revendications 1 à 4, dans lequel les moyens d'émission (10, 12, 14) des impulsions ultrasonores haute fréquence (14a) et les moyens de génération (10, 20, 22, 24) de l'onde acoustique basse fréquence (24a) sont orientés de sorte que les directions de propagation des impulsions ultrasonores (14a) et de l'onde acoustique basse fréquence (24a) sont perpendiculaires.

6. Dispositif acoustique de mesure selon l'une quelconque des revendications 1 à 4, dans lequel l'unité d'analyse (32) est apte à représenter en instantané les non-linéarités viscoélastiques et dissipatives en fonction des phases de compression et de détente de la pression hydrostatique basse fréquence.

7. Dispositif acoustique de mesure selon la revendication 3, dans lequel l'unité d'analyse (32) est apte à réaliser une représentation des composantes fréquentielles, une fréquence nulle (ordre 0), une fréquence fondamentale de résonance (ordre 1) et une fréquence double du piston (ordre 2), des non-linéarités élastiques et dissipatives en fonction de l'amplitude moyenne de la pression hydrostatique basse fréquence.

8. Méthode acoustique de mesure localisée et sans contact des non-linéarités élastiques et dissipatives et de la viscoélasticité d'un échantillon (2) disposé dans un réservoir (4) empli d'un fluide, comportant :

une étape d'émission d'une onde acoustique basse fréquence (24a) pour créer une variation périodique basse fréquence de la pression hydrostatique du fluide dans la région de l'échantillon (2), une étape de mesure des variations de la pression hydrostatique dues à l'onde acoustique basse fréquence (24a), une étape de génération d'impulsions ultrasonores haute fréquence (14a) traversant l'échantillon (2), une étape de réception des impulsions ultrasonores hautes fréquences ayant traversé l'échantillon (2), une étape de synchronisation des mesures des impulsions hautes fréquences et de la pression basse fréquence, et une étape de quantification, via une unité d'analyse (32) comportant un module de calcul des non-linéarités élastiques et dissipatifs ainsi que de la viscoélasticité de l'échantillon (2) à partir des modulations du temps de vol et de l'amplitude des impulsions ultrasonores (14a) ayant traversél'échantillon (2) en fonction des variations de la pression dues à l'onde acoustique basse fréquence.

9. Méthode acoustique de mesure selon la revendication précédente, comportant une étape de représentation instantanée des non-linéarités viscoélastiques et dissipatives en fonction des phases de compression et de détente de la pression hydrostatique basse fréquence.

10. Méthode acoustique de mesure selon la revendication 8, dans laquelle on utilise un pot vibrant (22) mettant en résonance un piston (24) pour créer la variation périodique basse fréquence, et comportant une étape de représentation des composantes fréquentielles, une fréquence nulle (ordre 0), une fréquence fondamentale de résonance (ordre 1) et une fréquence double du piston (ordre 2), des non-linéarités élastique et dissipative en fonction de l'amplitude moyenne de la pression hydrostatique basse fréquence.

**11.** Méthode acoustique de mesure selon l'une quelconque des revendications 8 à 10, comportant une étape de quantification d'un niveau d'endommagement de l'échantillon (2).

**12.** Méthode acoustique de mesure selon l'une quelconque des revendications 8 à 11, dans laquelle la fréquence de l'onde acoustique basse fréquence (24a) est comprise entre 2 Hz et 100 kHz, les impulsions ultrasonores (14a) présentant une gamme de fréquence de 20kHz à 100MHz et une cadence de tir environ 10 fois supérieure à la fréquence de l'onde acoustique basse fréquence (24a).

**13.** Méthode acoustique de mesure selon l'une quelconque des revendications 8 à 12, dans laquelle l'unité d'analyse (32) traite une séquence résultant du moyennage de 2 à 100 tirs de trains d'onde acoustique basse fréquence (24a) successifs.

**Patentansprüche**

**1.** Vorrichtung zur stellenweisen und berührungsfreien akustischen Messung der elastischen und dissipativen Nichtlinearitäten und der Viskoelastistizität einer Probe (2), umfassend:

- einen Behälter (4), der mit einem Fluid gefüllt und in der Lage ist, die Probe (2) aufzunehmen,
- Mittel zum Senden (10, 20, 22, 24) einer akustischen Niederfrequenzwelle (24a), die in der Lage ist, eine periodische Niederfrequenzvariation des hydrostatischen Drucks des Fluids in dem Bereich der Probe (2) zu schaffen,
- Messmittel (26, 30, 34), die geeignet sind, Variationen des hydrostatischen Drucks aufgrund der akustischen Niederfrequenzwelle (24a), die von den Sendemitteln (10, 20, 22, 24) erzeugt wird, zu messen,
- Mittel zum Erzeugen (10, 12, 14) von Hochfrequenz-Ultraschallimpulsen (14a),
- Empfangsmittel (16, 28, 30), die gegenüber den Erzeugungsmitteln (10, 12, 14) derart angeordnet sind, dass die Hochfrequenz-Ultraschallimpulse (14a), die die Probe (2) durchquert haben, von den Empfangsmitteln (16, 28, 30) empfangen werden,
- eine Synchronisationsausstattung (8), die es erlaubt, ein Synchronisationssignal (8a) zu erzeugen, um die Messungen der Hochfrequenzimpulse und des Niederfrequenzdrucks zu synchronisieren, und
- eine Analyseeinheit (32), die ein Modul zur Berechnung der elastischen und dissipativen Nichtlinearitäten sowie der Viskoelastistizität der Probe ausgehend von den Modulationen der Flugzeit und der Amplitude der Ultraschallimpulse (14a), die die Probe (2) durchquert haben, in Abhängigkeit von den Variationen des Drucks, die auf die akustische Niederfrequenzwelle zurückzuführen sind, umfasst.

**2.** Akustische Messvorrichtung nach Anspruch 1, die ein Multiparameter-Bildgebungsmodul der viskoelastischen Effekte (tan($\varphi$)) und der nichtlinearen elastischen akustischen ($\alpha$, $\beta$ und $\delta$) und dissipativen Effekte umfasst.

**3.** Akustische Messvorrichtung nach Anspruch 1 oder 2, wobei die Mittel zum Erzeugen (24) der akustischen Niederfrequenzwelle (24a) ein Schwingungsgefäß (22) umfassen, um einen dedizierten Kolben (24) in Resonanz zu versetzen, der in der Lage ist, eine periodische Niederfrequenzvariation zu schaffen.

**4.** Akustische Messvorrichtung nach Anspruch 1 oder 2, wobei die Mittel zum Erzeugen (24) der akustischen Niederfrequenzwelle (24a) einen akustischen Projektor umfassen, der in der Lage ist, eine akustische Niederfrequenzvariation zu erzeugen.

**5.** Akustische Messvorrichtung nach einem der Ansprüche 1 bis 4, wobei die Sendemittel (10, 12, 14) der Hochfrequenz-Ultraschallimpulse (14a) und die Mittel zum Erzeugen (10, 20, 22, 24) der akustischen Niederfrequenzwelle (24a) derart ausgerichtet sind, dass die Ausbreitungsrichtungen der Ultraschallimpulse (14a) und der akustischen Niederfrequenzwelle (24a) zueinander senkrecht sind.

**6.** Akustische Messvorrichtung nach einem der Ansprüche 1 bis 4, wobei die Analyseeinheit (32) in der Lage ist, sofort die viskoelastischen und dissipativen Nichtlinearitäten in Abhängigkeit von den Kompressions- und Entspannungsphasen des hydrostatischen Niederfrequenzdrucks darzustellen.

**7.** Akustische Messvorrichtung nach Anspruch 3, wobei die Analyseeinheit (32) in der Lage ist, eine Darstellung der Frequenzkomponenten, einer Nullfrequenz (Rang 0), einer Grundresonanzfrequenz (Rang 1) und einer doppelten Frequenz des Kolbens (Rang 2) der elastischen und dissipativen Nichtlinearitäten in Abhängigkeit von der mittleren Amplitude des hydrostatischen Niederfrequenzdrucks herzustellen.

8. Stellenweises und berührungsfreies akustisches Messverfahren der elastischen und dissipativen Nichtlinearitäten und der Viskoelastistizität einer Probe (2), die in einem Behälter (4), der mit einem Fluid gefüllt ist, angeordnet ist, umfassend:

einen Schritt des Sendens einer akustischen Niederfrequenzwelle (24a), um eine periodische Niederfrequenzvariation des hydrostatischen Druck des Fluids in dem Bereich der Probe (2) zu schaffen, einen Schritt des Messens der Variationen des hydrostatischen Drucks, die auf die akustische Niederfrequenzwelle (24a) zurückzuführen sind, einen Schritt des Erzeugens von Hochfrequenz-Ultraschallimpulsen (14a), die die Probe (2) durchqueren, und einen Schritt des Empfangens der Hochfrequenz-Ultraschallimpulse, die die Probe (2) durchquert haben,
einen Synchronisationsschritt der Messungen der Hochfrequenzimpulse und des Niederfrequenzdrucks, sowie einen Quantifizierungsschritt über eine Analyseeinheit (32), die ein Modul zum Berechnen der elastischen und dissipativen Nichtlinearitäten sowie der Viskoelastistizität der Probe (2) umfasst, ausgehend von den Modulationen der Flugzeit und der Amplitude der Ultraschallimpulse (14a), die die Probe (2) durchquert haben, in Abhängigkeit von den Variationen des Drucks, die auf die akustische Niederfrequenzwelle zurückzuführen sind.

9. Akustisches Messverfahren nach dem vorhergehenden Anspruch, das einen Schritt der Sofortdarstellung der viskoelastischen und dissipativen Nichtlinearitäten in Abhängigkeit von den Kompressions- und Entspannungsphasen des hydrostatischen Niederfrequenzdrucks umfasst.

10. Akustisches Messverfahren nach Anspruch 8, wobei man ein Schwingungsgefäß (22) verwendet, das einen Kolben (24) in Resonanz versetzt, um die periodische Niederfrequenzvariation zu schaffen, und einen Schritt des Darstellen der Frequenzkomponenten umfasst, einer Nullfrequenz (Rang 0), einer Grundresonanzfrequenz (Rang 1) und einer doppelten Frequenz des Kolbens (Rang 2) der elastischen und dissipativen Nichtlinearitäten in Abhängigkeit von der mittleren Amplitude des hydrostatischen Niederfrequenzdrucks.

11. Akustisches Messverfahren nach einem der Ansprüche 8 bis 10, das einen Quantifizierungsschritt eines Beschädigungsniveaus der Probe (2) umfasst.

12. Akustisches Messverfahren nach einem der Ansprüche 8 bis 11, wobei die Frequenz der akustischen Niederfrequenzwelle (24a) zwischen 2 Hz und 100 kHz liegt, wobei die Ultraschallimpulse (14a) einen Frequenzbereich von 20 kHz bis 100 MHz und einen Abfeuertakt etwa 10 Mal höher als die Frequenz der akustischen Niederfrequenzwelle (24a) aufweisen.

13. Akustisches Messverfahren nach einem der Ansprüche 8 bis 12, wobei die Analyseeinheit (32) eine Sequenz verarbeitet, die aus der Mittelung von 2 bis 100 Abfeuerungen aufeinanderfolgender akustischer Niederfrequenzwellenzüge (24a) resultiert.

## Claims

1. A localised and contactless acoustic measuring device of elastic and dissipative non-linearities and of viscoelasticity of a sample, the device comprising:

- a tank (4) filled with a fluid and capable of receiving the sample;
- an emitter (10, 20, 22, 24) of a low-frequency acoustic wave (24a) capable of creating a periodic low-frequency variation of the hydrostatic pressure in the region of the sample (2);
- a measurer (26, 30, 34) capable of measuring the variations of the hydrostatic pressure caused by the low-frequency acoustic wave (24a) generated by the emitter (10, 20, 22, 24);
- a generator (10, 12, 14) of high-frequency ultrasound pulses (14a);
- a receiver (16, 28, 30) arranged vis-a-vis the generator (10, 12, 14) such that the high-frequency ultrasound pulses (14a) having passed through the sample (2) are received by the receiver (16, 28, 30);
- a synchronisation equipment (8) allowing generation of a synchronisation signal (8a) for synchronising the high-frequency ultrasound pulses (14a) and the low-frequency pressure; and
- an analysis unit (32) comprising a calculation module of the elastic and dissipative non-linearities and of viscoelasticity of the sample from the modulations of time of flight and of the amplitude of the ultrasound impulses (14a) having passed through the sample (2) as a function of the pressure variations caused by the low-frequency acoustic wave.

2. Acoustic measuring device according to claim 1, further comprising a multiparametric imaging module of the viscoelastic effects ($\tan(\varphi)$) and of the non-linear acoustic elastic effects ($\alpha$, $\beta$ and $\delta$) and dissipative effects.

3. Acoustic measuring device according to claim 1 or 2, wherein the generator (24) of the low-frequency acoustic wave (24a) comprises a vibrating pot (22) for resonating a dedicated piston (24) capable of creating a periodic low-frequency variation.

4. Acoustic measuring device according to claim 1 or 2, wherein the generator (24) of the low-frequency acoustic wave (24a) comprises an acoustic projector capable of creating a low-frequency acoustic variation.

5. Acoustic measuring device according to any of claims 1 to 4, wherein the emitter (10, 12, 14) of the high-frequency ultrasound pulses (14a) and the generator (10, 20, 22, 24) of the low-frequency acoustic wave (24a) are oriented such that the propagation directions of the ultrasound pulses (14a) and of the low-frequency acoustic wave (24a) are perpendicular.

6. Acoustic measuring device according to any of claims 1 to 4, wherein the analysis unit (32) is capable of instantaneously representing the viscoelastic and dissipative non-linearities as a function of the phases of compression and relief of the low-frequency hydrostatic pressure.

7. Acoustic measuring device according to claim 3, wherein the analysis unit (32) is capable of conducting representation of the frequential components, a zero frequency (order 0), a fundamental resonance frequency (order 1) and a double frequency of the piston (order 2), of the elastic and dissipative non-linearities as a function of the average amplitude of the low-frequency hydrostatic pressure.

8. A localised and contactless acoustic measuring method of elastic and dissipative non-linearities and of viscoelasticity of a sample (2) arranged in a tank (4) filled with a fluid, the method comprising:

   • emitting a low-frequency acoustic wave (24a) for creating a periodic low-frequency variation of the hydrostatic pressure in the region of the sample (2);
   • measuring the hydrostatic pressure variations caused by the low-frequency acoustic wave (24a);
   • generating high-frequency ultrasound pulses (14a) passing through the sample (2);
   • receiving the high-frequency ultrasound pulses having passed through the sample (2);
   • synchronising the measurements of the high-frequency pulses and of the low-frequency pressure; and
   • quantifying, via an analysis unit (32) comprising a calculation module of the elastic and dissipative non-linearities and of the viscoelasticity of the sample (2) from the modulations of time of flight and of the amplitude of the ultrasound impulses (14a) having passed through the sample (2) as a function of the pressure variations caused by the low-frequency acoustic wave.

9. Acoustic measuring method according to the preceding claim, further comprising instantaneously representing of the viscoelastic and dissipative non-linearities as a function of the phases of compression and relief of the low-frequency hydrostatic pressure.

10. Acoustic measuring method according to claim 8, using a vibrating pot (22) for resonating a dedicated piston (24) capable of creating a periodic low-frequency variation, and further comprising representing the frequential components, a zero frequency (order 0), a fundamental resonance frequency (order 1) and a double frequency of the piston (order 2), of the elastic and dissipative non-linearities as a function of the average amplitude of the low-frequency hydrostatic pressure.

11. Acoustic measuring method according to any of claims 8 to 10, further comprising quantifying a level of damage of the sample (2).

12. Acoustic measuring method according to any of claims 8 to 11, wherein the frequency of the low-frequency acoustic wave (24a) is comprised between a 2 Hz and 100 kHz, the ultrasound pulses (14a) exhibiting a frequency range from 20 kHz to 100 MHz and a firing rate around 10 times greater than the frequency of the low-frequency acoustic wave (24a).

13. Acoustic measuring method according to any of claims 8 to 12, wherein the analysis unit (32) processes a sequence resulting from the averaging of 2 to 100 successive firings of trains of low-frequency acoustic wave (24a).

Figure 1

Figure 2

Figure 3

Figure 4

Figure 5

Figure 6

Figure 7a

Figure 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4844082 A, Fukukita

**Littérature non-brevet citée dans la description**

- **N. ICHIDA ; T. SATO ; M. LINZER.** Imaging the nonlinear parameter of the medium. *Ultrason. Imaging,* 1983, vol. 5, 295-299
- **Z. ZHU ; M.S. ROOS ; W.N. COBB ; K. JENSEN.** Determination of the acoustic nonlinearity parameter B/A from phase measurements. *J. Acoust. Soc. Am.,* 1983, vol. 74 (5), 1518-1521
- **C. BARRIÈRE ; D. ROYER.** Diffraction effects in the parametric interaction of acoustic waves: application to measurements of the nonlinearity parameter B/A in liquids. *IEEE Trans. UFFC.,* 2001, vol. 48 (6), 1706-1715
- **C.M. SEHGAL ; R.C. BAHN ; J.F. GREENLEAF.** Measurement of the acoustic nonlinearity parameter B/A in human tissues by a thermodynamic method. *J. Acoust. Am. Soc.,* 1984, vol. 76 (4), 1023-1029
- **V. ZAITSEV ; V. NAZAROV ; V. GUSEV ; B. CASTAGNEDE.** Novel nonlinear-modulation acoustic technique for crack detection. *NDT&E International,* 2006, vol. 39, 184-194
- **G. GREMAUD ; M. BUJARD ; W. BENOIT.** The coupling technique: A two-wave acoustic method for the study of dislocation dynamics. *J. Appl. Phys.,* 1987, vol. 61 (5), 1795-1805
- **G. RENAUD et al.** Non-linear acoustic measurements to assess crack density in trabecular bone. *International Journal of non-linear mechanics,* 2008, vol. 43 (3), 194-200
- **K.R. MCCALL ; R.A. GUYER.** Equation of state and wave propagation in hysteretic nonlinear elastic materials. *Journal of Geophysical Research,* 1984, vol. 99 (B12), 23 887-23 897